(19) Europäisches Patentamt
European Patent Office
Office européen des brevets

(11) EP 1 607 953 A1

(12) EUROPEAN PATENT APPLICATION
published in accordance with Art. 158(3) EPC

(43) Date of publication:
**21.12.2005 Bulletin 2005/51**

(21) Application number: **04723400.0**

(22) Date of filing: **25.03.2004**

(51) Int Cl.$^7$: **G11B 7/24**, G11B 7/26, G11B 7/0045, G11B 7/005

(86) International application number:
**PCT/JP2004/004206**

(87) International publication number:
**WO 2004/086391 (07.10.2004 Gazette 2004/41)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **25.03.2003 JP 2003083076**
**19.03.2004 JP 2004081714**

(71) Applicant: **Ricoh Company, Ltd.**
**Tokyo 143-8555 (JP)**

(72) Inventors:
- **ITO, Kazunori**
  **Yokohama-shi, Kanagawa 2240006 (JP)**
- **ISHIMI, Tomomi**
  **Yokohama-shi, Kanagawa 2470033 (JP)**
- **KOTAKA, Kazuhiro**
  **Seya, Yokohama-shi, Kanagawa 2460035 (JP)**
- **TOMURA, Tatsuya**
  **1330044 (JP)**
- **NAKAMURA, Yuki**
  **1950053 (JP)**
- **YAMADA, Katsuyuki**
  **Zama-shi, Kanagawa 2280024 (JP)**

(74) Representative: **Leeming, John Gerard**
**J.A. Kemp & Co.,**
**14 South Square,**
**Gray's Inn**
**London WC1R 5JJ (GB)**

# (54) OPTICAL RECORDING MEDIUM, ITS MANUFACTURING METHOD, AND RECORDING/REPRODUCING METHOD

(57) An object is to provide an optical recording medium which can obtain a sufficient focusing characteristic even at recording speeds at which a recording linear velocity exceeds 4x speed at the same capacity as a DVD-ROM, and which can suppress in-plane fluctuations of the degree of modulation, and which enables highly reliable recording, and a method of manufacturing the optical recording medium and a recording and reproducing method. To this end, there is provided an optical recording medium having a substrate, and at least a recording layer and a reflective layer on the substrate, wherein the optical recording medium is formed such that the substrate has a set central value of a thickness, and when there is a substrate thickness within a given range from the set central value, an axial direction acceleration of the optical recording medium has a maximum allowable value, and as an amount of deviation from the set central value exceeds the given range, a maximum allowable value of the axial direction acceleration at the optical recording medium becomes smaller.

FIG. 5

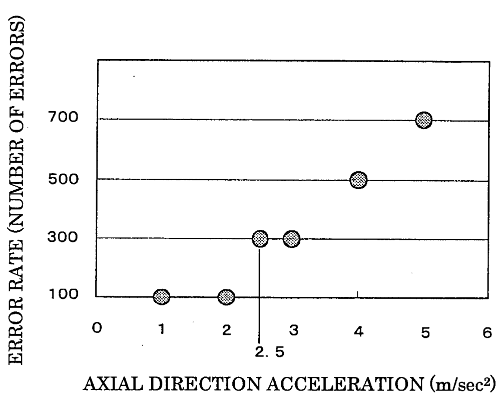


EP 1 607 953 A1

## Description

### Technical Field

The present invention relates to an optical recording medium in which, due to the illumination of a light beam, optical changes are caused in a recording layer material such that information can be recorded and reproduced, and to a method of manufacturing the optical recording medium, and to a recording and reproducing method.

### Background Technology

An optical recording medium is a structure having at least a recording layer and a reflective layer on a substrate, and due to an energy beam such as laser light or the like being illuminated on the recording layer, reversible or irreversible optical changes are caused in the recording layer, and information is recorded and reproduced by utilizing these changes.

The substrate is a supporting base of the optical recording medium, and also has the functions of transmitting therethrough the light beam used in recording and reproducing, compensating for the aberration which the optical system of the recording system has, and keeping the reproduction error rate low. As a technique relating to such a function, an invention has been proposed (see Patent Literature 1) which prescribes conditions of the substrate for a DVD (Digital Versatile Disc), and the optical system and the light source. Further, in Patent Literature 2, there is disclosure relating to the allowable values of tilting of a substrate. Moreover, methods of suppressing errors by preventing warping of the substrate have been proposed (see Patent Literatures 3 to 4).

Currently, there are reproduction-dedicated DVD-ROMs, and recording-type DVD-RAMs, DVD-Rs, DVD-RWs, DVD+Rs, and DVD+RWs as DVD optical recording media having a storage capacity of 4.7 GB which have been made into products. With regard to the reproduction speeds and recording speeds thereof, mechanical specification values of the optical recording media are prescribed by standards in accordance with the various characteristics at 3.5 m/sec which is the basic speed of a DVD. Concretely, the substrate thickness is 0.6 mm (600 μm), and with this value as the set central value, the reproduction speed and the recording speed are prescribed such that the allowable value of the axial direction acceleration is a maximum when the substrate thickness is the set central value, and the system is made to function as a recording system.

In order to improve the convenience for the user, improvements in recording speeds of optical recording media in recent years have been aimed for. 4x speed products are already being sold, and research and development relating to making recording speeds even higher are continuing. However, if the recording speed exceeds 4x speed (recording linear velocity = 14 m/sec), the mechanical characteristics of optical recording media which are prescribed by conventional standards, and in particular, the maximum allowable values of the axial direction acceleration and the oscillation amount of the substrate arising from warping (and convex portions in particular) of the substrate, are too large and are insufficient for recording and reproducing of a level which can be used practically.

Concretely, in an optical recording medium of an axial direction acceleration of about 8 $m/sec^2$ which is currently prescribed, if recording is carried out at a recording speed of 8x speed (recording linear velocity = 28 m/sec) for example, at the portion where the acceleration within the optical recording medium surface is large, sufficient focus of the pickup cannot be obtained, and problems such as so-called "recording omissions", which are thought to be due to a decrease in recording power, and the like arise. Here, these "recording omissions" mean the phenomenon of formation of a recording mark being insufficient due to a decrease in recording power and the degree of modulation of the reproduction signal markedly deteriorating, as shown by 6 in Fig. 2.

In cases in which problems, which are influenced by the characteristics of the pickup used in recording and reproducing, arise in this way, the deviation from the central value of the substrate thickness of the optical recording medium also has an effect. Therefore, it is thought that there is the need to add some type of stipulation relating to the deviation from the central value of the substrate thickness and the maximum allowable value of the axial direction acceleration.

However, in the conventional techniques, the maximum allowable value of the axial direction acceleration when the substrate thickness is the set central value is only considered independently, and there is no disclosure or suggestion of conventional examples which simultaneously examine deviation from the central value of the substrate thickness and axial direction acceleration due to warping of the substrate.

Patent Literature 1 Japanese Patent No. 3128247
Patent Literature 2 Japanese Patent Application Laid-Open (JP-A) No. 8-273199
Patent Literature 3 Japanese Patent No. 3137657
Patent Literature 4 JP-A No. 8-180476

Disclosure of the Invention

An object of the present invention is to provide an optical recording medium at which a sufficient focusing characteristic can be obtained even at recording speeds at which the recording linear velocity exceeds 4x speed (recording linear velocity = 14 m/sec) at the same capacity as a DVD-ROM, and in-plane fluctuations in the degree of modulation can be suppressed, and highly reliable recording is possible, and a method of manufacturing the optical recording medium, and a recording and reproducing method.

In order to overcome the above-described problems, the present inventors carried out diligent studies, and as a result, in a case in which recording or reproducing a signal is carried out via a substrate, when warping (and convex portions in particular) due to static or dynamic deformation of the substrate arises, aberration of the collected laser beam arises due to this warping, and this aberration causes problems such as a deterioration in the reproduction signal, a decrease in the effective recording power, so-called "recording omissions", and the like. In particular, because the effects of warping occurring locally at the substrate increase in proportion to the square of the speed, these problems become more marked and affect the recording characteristic as recording and reproducing speeds become higher speeds.

Thus, the present inventors arrived at the following means for solving, as a result of carrying out diligent studies on the relationship between the deviation from the central value of the substrate thickness and the warping of the substrate and the acceleration of the optical recording medium, in a case of using a substrate which can be realized under present-day substrate molding conditions. Namely, means for solving are:

<1> an optical recording medium having a substrate, and at least a recording layer and a reflective layer on the substrate, wherein the optical recording medium is formed such that the substrate has a set central value of a thickness, and when there is a substrate thickness within a given range from the set central value, an axial direction acceleration of the optical recording medium has a maximum allowable value, and as an amount of deviation from the set central value exceeds the given range, a maximum allowable value of the axial direction acceleration at the optical recording medium becomes smaller.

<2> the optical recording medium of above <1>, wherein the optical recording medium is formed such that the set central value of the substrate thickness is 600 μm, and, as the amount of deviation from the set central value exceeds ±10 μm, the maximum allowable value of the axial direction acceleration at the optical recording medium becomes smaller.

<3> the optical recording medium of either of above <1> and <2>, wherein the substrate thickness is 580 to 620 μm.

<4> the optical recording medium of any of above <1> to <3>, wherein, given that the maximum allowable value of the axial direction acceleration of the optical recording medium, at a time when the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M ($m/sec^2$), and the substrate thickness is D (μm), the optical recording medium is formed such that the maximum allowable value M of the axial direction acceleration satisfies 2.5 $m/sec^2$ in a range of $590\ \mu m < D < 610\ \mu m$, and satisfies following mathematical formula 1 in a range of $610\ \mu m \leq D \leq 620\ \mu m$, and satisfies following mathematical formula 2 in a range of $580\ \mu m \leq D \leq 590\ \mu m$.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

<5> the optical recording medium of any of above <1> to <4>, wherein the axial direction acceleration at the optical recording medium is greater than or equal to 0.8 $m/sec^2$.

<6> the optical recording medium of any of above <1> to <5>, wherein a peripheral direction acceleration at the optical recording medium is 0.8 to 2.0 $m/sec^2$.

<7> the optical recording medium of any of above <1> to <6>, wherein a wavelength of laser light for recording and reproducing is 620 to 700 nm, and a lens NA is 0.60 to 0.70.

<8> the optical recording medium of any of above <1> to <7>, wherein a recordable linear velocity (L.V.) is a range of $14\ m/sec < L.V. \leq 56\ m/sec$.

<9> the optical recording medium of any of above <1> to <8>, wherein the recording layer is a phase-changing-type recording layer.

<10> the optical recording medium of any of above <1> to <8>, wherein the recording layer is an organic-dyestuff-containing recording layer.

<11> a method of manufacturing an optical recording medium having at least a recording layer and a reflective layer on a substrate, wherein the optical recording medium is manufactured by controlling such that, when a substrate thickness is within a given range from a set central value, an axial direction acceleration of the optical recording medium has a maximum allowable value, and as an amount of deviation from the set central value of the substrate thickness exceeds the given range and becomes larger, a maximum allowable value of the axial direction acceleration becomes smaller.

<12> the method of manufacturing an optical recording medium of above <11>, wherein, given that the maximum allowable value of the axial direction acceleration of the optical recording medium, at a time when the substrate thickness is 580 to 620 μm and the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M (m/sec$^2$), and the substrate thickness is D (μm), the optical recording medium is manufactured such that the maximum allowable value M of the axial direction acceleration satisfies 2.5 m/sec$^2$ in a range of 590 μm < D < 610 μm, and satisfies following mathematical formula 1 in a range of 610 μm ≤ D ≤ 620 μm, and satisfies following mathematical formula 2 in a range of 580 μm ≤ D ≤ 590 μm.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

<13> the method of manufacturing an optical recording medium of either of above <11> and <12>, wherein the substrate is molded by extrusion compression molding by using a stamper in which a thickness of an outer peripheral portion is thicker than a thickness of an inner peripheral portion.

<14> the method of manufacturing an optical recording medium of above <13>, wherein a difference in the thickness of the inner peripheral portion and the thickness of the outer peripheral portion at the stamper is less than or equal to ±20 μm.

<15> the method of manufacturing an optical recording medium of any of above <11> to <14>, further comprising monitoring a relationship between the substrate thickness and the axial direction acceleration of the optical recording medium, and assessing success/failure by comparing a monitored value with a success/failure assessment reference which relates to a relationship between the amount of deviation from the set central value of the substrate thickness which is set in advance and the maximum allowable value of the axial direction acceleration of the optical recording medium.

<16> a recording and reproducing method comprising the step of carrying out recording and reproducing on the optical recording medium of any of above <1> to <10>, by using a pickup having a frequency band which is determined in advance and corresponds to a recording and reproducing speed.

<17> the recording and reproducing method of above <16>, wherein a wavelength of laser light of the pickup is 620 to 700 nm, and a lens NA is 0.60 to 0.70.

<18> the recording and reproducing method of any of above <15> to <17>, wherein, when a linear velocity (L.V.) used in recording is 14 m/sec < L.V. ≤ 56 m/sec, the frequency band of the pickup is set so as to satisfy following mathematical formula 3:

<Mathematical Formula 3>

frequency band (kHz) = [recording linear speed (m/sec) / basic

linear speed (m/sec)] × (0.589) [(+10%) to (-0%)]

where, in mathematical formula 3, the basic linear speed is a recording and reproducing speed which is basic in a system, and is 3.49 m/sec in a DVD, and [(+10%) to (-0%)] expresses tolerance at a - (minus) side and a + (plus) side.

Brief Description of the Drawings

Fig. 1 is a diagram showing a summary of a recording and reproducing device used in a recording and reproducing method of an optical recording medium.

Fig. 2 is a diagram for explaining a relationship between warping of a substrate and recording omissions.

Fig. 3 is a diagram showing a relationship between a deviation amount from a set central value of a substrate thickness, and an error rate.

Fig. 4 is a diagram showing a relationship between the deviation amount from the set central value of the substrate thickness, and the error rate (the proportion of increase in jitter).

Fig. 5 is a diagram showing a relationship between axial direction acceleration of an optical recording medium using a substrate having a portion where the substrate thickness deviates 20 μm from the set central value, and the error rate.

Fig. 6 is a diagram showing a relationship between the deviation amount from the set central value of the substrate thickness, and a maximum allowable value of axial direction acceleration.

Fig. 7 is a diagram showing an oscillation frequency characteristic of an optical recording medium and a frequency characteristic of an actuator of a general pickup.

Fig. 8 is a diagram showing a servo characteristic of a pickup suited to an optical recording medium of an axial direction acceleration of 2.5 m/sec$^2$.

Fig. 9 is a diagram showing results of investigating effects on substrate thickness in a case in which there is a difference in thicknesses of an inner peripheral portion and an outer peripheral portion of a stamper, and in a case in which there is no difference.

Fig. 10 is schematic sectional view showing an example of a layer structure of a phase-changing-type optical recording medium of the present invention.

Figs. 11A to 11C are diagrams showing examples of structures of optical recording media for a CD-R.

Figs. 12A to 12C are diagrams showing examples of structures of optical recording media for a writable DVD.

Best Modes for Implementing the Invention

(Optical Recording Medium)

The optical recording medium of the present invention has a substrate, and at least a recording layer and a reflective layer on the substrate, and further has other layers as needed.

The optical recording medium is formed such that a linear velocity (L.V) at which recording is possible is a range of 14 m/sec < L.V. ≤ 56 m/sec (DVD 4× speed to 16× speed), and a central value is set for the substrate thickness, and when the substrate thickness is within a given range from the set central value, an axial direction acceleration of the optical recording medium has a maximum allowable value, and as an amount of deviation from the set central value of the substrate thickness exceeds the given range and increases, the maximum allowable value of the axial direction acceleration becomes smaller. In this case, it is preferable that the optical recording medium is formed such that the set central value of the substrate thickness is 600 μm, and as the amount of deviation from the set central value exceeds ±10 μm, the maximum allowable value of the axial direction acceleration at the optical recording medium becomes smaller.

Here, Fig. 1 is a diagram showing a summary of a recording and reproducing system of an optical recording medium such as a CD, a DVD, or the like, which is distributed on the market as a current product. Recording and reproducing light 4 which is narrowed by an objective lens 3 is refracted as shown in Fig. 1 by the refractive index difference between the substrate 1 and the air, and passes through the substrate 1 and is illuminated onto a recording layer 2.

In this case, as shown in Fig. 2, in a case in which warping (a convex portion) 5 having a large acceleration component exists at the substrate 1, the problem of so-called "recording omissions" arises. As the recording linear velocity becomes higher speed, because the width Δt (sec) of the warping 5 narrows relatively (because the passage time becomes relatively short), the acceleration component [$\Delta z/(\Delta t)^2$] of the warping becomes large. When the acceleration component becomes large, either the frequency band of the positioning feedback of the pickup must be made to be large, or the Δz component of the warping of the substrate must be made to be small. Note that, in the acceleration, there is not only axial direction acceleration, but there is also peripheral direction acceleration. However, according to experimentation, there is no particular effect if the peripheral direction acceleration is 1.1 m/sec$^2$ which is the standard value of present-day DVDs. Accordingly, the peripheral direction acceleration is preferably 0.8 to 2.0 m/sec$^2$.

Fig. 3 is a diagram examining the relationship between the deviation amount from the set central value of the substrate thickness and the error rate (the number of errors), with recording carried out at an axial direction acceleration of the optical recording medium of 2.5 m/sec$^2$ and at 8x speed of a DVD (recording linear velocity = 28 m/sec) and reproduction carried out at 3.5 m/sec which is the basic recording and reproducing speed of a DVD. From the results of Fig. 3, it can be understood that the error rate at the time of reproduction becomes high under the condition that the substrate thickness is greater than 600 μm which is the set central value of the substrate thickness in respective standards, and concretely, in a case in which the substrate thickness is greater than or equal to 610 μm. Fig. 3 shows results only in the direction in which the substrate thickness is thicker than the set central value. However, also in the case in which the substrate thickness is thinner than the set central value, similarly, the error rate increases the further from the set central value. Namely, it can be understood that the error rate at the time of reproduction varies depending on the substrate thickness and the characteristics of the pickup used in the recording and reproducing.

In Fig. 4, recording is carried out by using a pickup in which the frequency band of the feedback loop of the axial direction of the optical recording medium is 5 kHz, and with the focus offset optimized at 600 μm which is the set central value of the substrate thickness, and further, by varying the substrate thickness. Further, the error rate (proportion of increase in jitter) of the reproduction signal, at the time of carrying out reproduction by optimizing the focus offset of the pickup such that the reproduction signals each become a maximum, is evaluated. From Fig. 4, it can be recognized that the error rate of the reproduction signal increases as the deviation amount from the set central value of the substrate thickness becomes larger.

Judging comprehensively from the above-described results, when the substrate thickness deviates by greater than or equal to a given extent from the set central value, the maximum allowable value of the axial direction acceleration of the optical recording medium must be set to be lower than the maximum allowable value at the set central value.

Next, Fig. 5 shows experimental results relating to how the error rate at the time of reproduction varies in accordance with the axial direction acceleration which the optical recording medium has, at the time of carrying out recording at a recording speed of 8x speed of a DVD (recording linear velocity = 28 m/sec) on an optical recording medium using a substrate whose set central value of the substrate thickness is 600 μm and which has a portion where the substrate thickness deviates by 20 μm from the set central value. Note that the horizontal axis in Fig. 5 is the axial direction acceleration of the medium evaluated under the condition of 3.5 m/sec which is the basic recording and reproducing speed of a DVD. The vertical axis in Fig. 5 is the error rate (number of errors) in the case of carrying out recording at 8x speed of a DVD (recording linear velocity = 28 m/sec) and reproducing at 3.5 m/sec on the media of the respective acceleration conditions.

With present-day optical recording media, the maximum allowable value of the axial direction acceleration is stipulated as 8 m/sec$^2$. However, in the results of Fig. 5, in a case in which the axial direction acceleration is greater than about 2.5 m/sec$^2$, errors arise, and if the axial direction acceleration is less than or equal to 2 m/sec$^2$, the error rate can be kept low. In this case, the axial direction acceleration at the optical recording medium is preferably greater than or equal to 1.0 m/sec$^2$.

Accordingly, it can be understood that, in an optical recording medium corresponding to high speeds in excess of 4x speed, the maximum allowable value of the axial direction acceleration must be reduced greatly from what it has been until now.

From the above results, it can be thought that, with the maximum allowable value of the axial direction acceleration being 2.5 m/sec$^2$ within a given range from the set central value of the substrate thickness, as the deviation amount from the set central value of the substrate thickness exceeds the given range and increases, the errors at the time of reproducing the recording marks can be decreased if the maximum allowable value of the axial direction acceleration is set to be low. Here, "a given range" in the phrase "within a given range from the set central value" is a range in which the object of the present invention, which is to obtain an optical recording medium at which highly reliable recording is possible, can be achieved, and is determined in terms of design and experimentally, but is usually about ±10 μm as shown in Fig. 6.

Concretely, from the dependence of the characteristics of the pickup on the substrate thickness, as shown in Fig. 6, it is preferable that the maximum allowable value of the axial direction acceleration is set so as to become smaller in proportion to the square of the deviation amount from the central value of the substrate thickness, i.e., so as to make the relationship between the both fall within the hatched region of Fig. 6. Given that the maximum allowable value of the axial direction acceleration of the optical recording medium, at a time when the substrate thickness is 580 to 620 μm and the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M (m/sec$^2$), and the substrate thickness is D (μm), it is preferable to set such that the maximum allowable value M of the axial direction acceleration satisfies 2.5 m/sec$^2$ in a range of 590 μm < D < 610 μm, and satisfies following mathematical formula 1 in a range of 610 μm ≤ D ≤ 620 μm,

and satisfies following mathematical formula 2 in a range of 580 μm ≤ D ≤ 590 μm.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

Further, Fig. 7 shows an oscillation frequency characteristic at the time of rotating, at a linear velocity of 3.5 m/sec, a medium having an axial direction acceleration obtained as described above of 2.5 m/sec$^2$, in comparison with the results of a time of rotating, at the same speed, an optical recording medium of an axial direction acceleration of 8 m/sec$^2$ which is the standard value of DVD media.

In this way, it can be understood that, by making the axial direction acceleration of the optical recording medium small, the frequency at the point where the gain of the oscillation zero-crosses can be made to be small.

Further, the frequency characteristic of an actuator used in a pickup which can read an optical recording medium of, for example, 8 m/sec$^2$ at a low reading error rate (i.e., the servo characteristic of the pickup) also is illustrated together. However, when used in the recording and reproducing of an optical recording medium such as a DVD or the like, it is designed in this way such that the zero cross frequency is slightly larger than the frequency characteristic of the optical recording medium. It is sufficient for the basic linear velocity range to be a large range of about 20 dB up to an actual rotational frequency of about 9.6 Hz, and about 0.5 dB in the damping region of frequencies greater than or equal to that. If the frequency range is made to be greater than that, the natural oscillation number of the actuator must be designed to be larger. In this case, the actuator becomes larger and the manufacturing costs increase, and if it is set to be too large, the vibrations of the actuator itself become problematic and the signal characteristic conversely worsens.

Accordingly, as can be understood from Fig. 7, in the case of an optical recording medium whose axial direction acceleration is 2.5 m/sec$^2$, there is the advantage that the zero cross frequency (frequency band) can be made to be small, as the servo characteristic of the pickup prescribed in a conventional DVD recording and reproducing system. In this way, it is possible to construct a recording system in which, when the axial direction acceleration of the optical recording medium is made to be small, the recording and reproducing characteristic does not deteriorate even in cases of rotating the medium at higher speeds with the frequency band of the servo characteristic remaining as it is currently.

When a reproduction test was actually carried out by using an optical recording medium whose axial direction acceleration was 2.5 m/sec$^2$ and by varying the rotational speed and by using a pickup of a frequency band of 2.1 kHz which is the servo characteristic of a conventional recording system, even at a linear velocity of about 14 m/sec which is a 4x speed equivalent of 3.49 m/sec which is the basic linear speed of a DVD, the residual focus error value which is a prescribed value of DVD systems could be made to be less than or equal to 0.2 μm, and with regard to the jitter characteristic of the reproduction signal as well, a value of about 7%, which is lower than 9% which is the prescribed value, could be obtained.

The jitter when the optical recording medium was rotated at 3.49 m/sec was 6.8%. Further, when carrying out a test in which the control gain of the pickup was made to be electrically large and the frequency band was raised, the frequency at which the jitter, which is a prescribed value, exceeded 9% was about 3.3 kHz which was an increase of about 50%.

When the rotational speed of the optical recording medium is varied, the apparent axial direction acceleration increases in proportion to the square of the linear velocity. Fig. 8 is a drawing showing this situation. The frequency characteristic of the optical recording medium and the frequency band of the servo system at this time are shown. From theses results, under the condition of DVD 8x speed for example, the servo characteristic of a pickup suited to an optical recording medium whose axial direction acceleration is 2.5 m/sec$^2$ is about 4.8 to 7 kHz. In the range of a linear velocity of 16x speed (recording linear velocity = 56 m/sec), a pickup having a servo characteristic of a frequency band of about 9.4 kHz to 14 kHz can be used.

In the optical recording medium of the present invention, the recording layer is not particularly limited provided that some type of optical change is caused thereat due to the illumination of laser light and information can be recorded by this change. The recording layer may be either of a phase-changing-type recording layer or an organic-dyestuff-containing recording layer.

Here, Fig. 10 is a schematic sectional view showing an example of a phase-changing-type optical recording medium of the present invention. A first protective layer 12, a recording layer 13, a second protective layer 14, a third protective layer 15, and a reflective layer 16 are laminated in that order on a substrate 11.

- Recording Layer -

The recording layer 13 is not particularly limited, and can be appropriately selected in accordance with the object. For example, the recording layer 13 contains Ag, In, Sb, and Ge, and further, as needed and for the purpose of aiming for improvement in the amorphous stability or the like, contains at least one element selected from Mg, Al, Si, Ca, Cr, Mn, Co, Cu, Ga, Se, Te, Pd, and rare earth elements. Examples of the rare earth elements are Sc, Y, La, Ce, Pr, Nd, Pm, Sm, Eu, Gd, Tb, Dy, Ho, Er, Tm, Yb, Lu, and the like.

Usually, the film thickness of the recording layer is preferably 5 to 20 nm.

As the method of forming the recording layer, various types of vapor-phase growth methods, e.g., vacuum deposition, sputtering, plasma CVD, optical CVD, ion plating, electron beam deposition, and the like are used. Among these, sputtering is excellent in terms of mass produceability, film properties, and the like.

- First Protective Layer and Second Protective Layer -

The first protective layer 12 and the second protective layer 14 have operational effects such as preventing deterioration and changing of the properties of the recording layer 13, increasing the adhesive strength of the recording layer 3, improving the recording characteristics, and the like. Examples include metal oxides such as SiO, $SiO_2$, ZnO, $SnO_2$, $Al_2O_3$, $TiO_2$, $In_2O_3$, MgO, $ZrO_2$ and the like, nitrides such as $Si_3N_4$, AlN, TiN, BN, ZrN and the like, sulfides such as ZnS, $In_2S_3$, $TaS_4$ and the like, carbides such as SiC, TaC, $B_4C$, WC, TiC, ZrC and the like, diamond-like carbon (DLC), and mixtures thereof. Among these, mixtures of ZnS and $SiO_2$ are preferable. Mixtures of ZnS and $SiO_2$ are preferable with regard to the points that they have excellent heat resistance, low thermal conductivity, and chemical stability, and the residual stress of the film is small, and it is difficult for deterioration in characteristics such as the recording sensitivity, the erasing ratio, and the like to occur thereat even due to repeated recording/erasure, and also have excellent adhesion to the recording layer.

As the layer forming method of the first protective layer 12 and the second protective layer 14, various types of vapor-phase growth methods, e.g., vacuum deposition, sputtering, plasma CVD, optical CVD, ion plating, electron beam deposition, and the like are used. Among these, sputtering is excellent in terms of mass produceability, film properties, and the like.

The thicknesses of the first protective layer 12 and the second protective layer 14 are not particularly limited, and can be appropriately selected in accordance with the purpose. Usually, the film thickness of the first protective layer is preferably 50 to 90 nm.

- Reflective Layer -

The reflective layer serves as a light reflecting layer on the one hand, but also functions as a heat releasing layer which releases heat which is applied to the recording layer due to the illumination of laser light at the time of recording. Because the formation of amorphous marks is greatly affected by the cooling speed due to the release of heat, the selection of the reflecting layer is particularly important in media which correspond to high linear velocities.

For example, metal materials such as Al, Au, Ag, Cu, Ta and the like, or alloys thereof or the like can be used at the reflecting layer 16. Further, Cr, Ti, Si, Cu, Ag, Pd, Ta and the like can be used as added elements to these metal materials. Among these, it is preferable to contain either of Ag or an Ag alloy. Usually, the reflecting layer structuring the phase-changing-type optical recording medium is preferably at least any metal having high thermal conductivity and high reflectance, from the standpoint of the heat conductivity which adjusts the cooling speed of the heat generated at the time of recording, and from the optical standpoint of improving the contrast of the reproduction signal by utilizing the interference effect. In this case, in pure Ag or in Ag alloys, the thermal conductivity of the Ag is 427 W/m•K which is extremely high, and immediately after the recording layer reaches a high temperature at the time of recording, a rapid cooling structure which is suited to amorphous mark formation can be realized.

When considering the thermal conductivity in this way, pure silver is best, but in consideration of corrosion resistance, Cu may be added. In this case, the range of the added amount of the copper in order to not harm the characteristics of the Ag is preferably 0.1 to 10 atomic %, and more preferably 0.5 to 3 atomic %. Note that excess addition of copper conversely deteriorates the corrosion resistance of the Ag.

The reflective layer 16 can be formed by various types of vapor-phase growth methods, e.g., vacuum deposition, sputtering, plasma CVD, optical CVD, ion plating, electron beam deposition, or the like. Among these, sputtering is excellent in terms of mass produceability, film properties, and the like.

The heat releasing ability of the reflecting layer is basically proportional to the thickness of the layer, and usually, the film thickness of the reflective layer is preferably 60 to 300 nm.

As needed, a resin protective layer can further be provided on the reflective layer. The resin protective layer has the operational effect of protecting the reflective layer in the processes and at the point in time when it becomes a product. Usually, the resin protective layer is formed of an ultraviolet curing resin. The film thickness of the resin protective layer is preferably 2 to 5 μm.

- Third Protective Layer -

Between the protective layer and the reflective layer, it is preferable to provide, as a barrier layer, the third protective layer 15 which does not contain sulfur.

Examples of materials of the third protective layer 15 are Si, SiC, SiN, GeN, $ZrO_2$, and the like. Among these, Si or SiC are preferable from the standpoint that the barrier ability thereof is particularly high.

If pure Ag or an Ag alloy is used in the reflecting layer, in a case of using a protective layer which contains sulfur such as a mixture of ZnS and $SiO_2$, the sulfur diffuses into the Ag, and problems which become disk defects arise (the sulfuration reaction of the Ag). Accordingly, as the third protective layer which prevents such a reaction, it is preferable to select an appropriate material from standpoints such as (1) having a barrier ability which prevents a sulfuration reaction of the Ag, (2) being optically transparent with respect to laser light, (3) having low thermal conductivity for the formation of amorphous marks, (4) having good adhesion with the protective layer and the reflective layer, (5) being easy to form, and the like. Materials, whose main component is Si or SiC and which satisfy the above-described conditions, are preferable as the structural material of the third protective layer.

The film thickness of the third protective layer is preferably 2 to 20 nm, and 2 to 10 nm is more preferable. If the film thickness is less than 2 nm, there are cases in which the third protective layer does not function as a barrier layer. If the film thickness exceeds 20 nm, there is the concern that it will lead to a deterioration in the degree of modulation.

- Substrate -

Usually, glass, ceramic, resin, or the like is used as the material of the substrate 11, and, from the standpoints of moldability and cost, a resin substrate is suitable. Examples of the resin are polycarbonate resin, acrylic resin, epoxy resin, polystyrene resin, acrylonitrile-styrene copolymer resin, polyethylene resin, polypropylene resin, silicone resin, fluorine resin, ABS resin, urethane resin, and the like. From the standpoints of moldability, optical characteristics and cost, polycarbonate resin and acrylic resin are preferable.

The thickness and characteristics of the substrate are as described above.

An adhesive layer, which is for laminating the substrate 11 on which information signals are written and a substrate for laminating, is formed by a double-sided tacky sheet in which a tacky adhesive is coated on both sides of a base film, or a thermosetting resin or an ultraviolet curing resin. The film thickness of the adhesive layer is usually about 50 μm.

In a case in which a tacky sheet or a thermosetting resin is used as the adhesive layer, there is no need for the substrate for laminating (dummy substrate) to be transparent. However, if an ultraviolet curing resin is used at the adhesive layer, the substrate for laminating (dummy substrate) is made to be a transparent substrate through which ultraviolet rays pass. The thickness of the substrate for laminating is usually 0.6 mm which is the same as the transparent substrate 1 at which information signals are written.

Figs. 11A to 11C are schematic sectional views showing examples of layer structures of a writable optical recording medium (CD-R type) which can be applied to the optical recording medium of the present invention, and these are examples of writable optical disks. Fig. 11A shows a CD-R formed from a substrate 21 / a recording layer 22 / a reflective layer 26 / a protective layer 24. Fig. 11B shows a CD-R formed from the substrate 21 / an undercoat layer 23 / the recording layer 22 /the reflective layer 26 /the protective layer 24. Fig. 11C shows a CD-R formed from a hard coat layer 25 / the substrate 21 /the undercoat layer 23 / the recording layer 22 / the reflective layer 26 /the protective layer 24.

Figs. 12A to 12C are schematic sectional views showing examples of layer structures of a writable optical recording medium (DVD) which can be applied to the optical recording medium of the present invention. Fig. 12A shows a DVD formed from the substrate 21 / the recording layer 22 / the reflective layer 26 / the protective layer 24. Fig. 12B shows a DVD formed from the substrate 21 / the recording layer 22 / the reflective layer 26 / the protective layer 24 / an adhesive layer 28 / a protective substrate 27. Fig. 12C shows a DVD formed from the hard coat layer 25 / the substrate 21 / the undercoat layer 23 / the recording layer 22 / the reflective layer 26 / the protective layer 24 /the adhesive layer 28 / the protective substrate 27.

As the structure of the optical recording medium in a case in which the optical recording medium of the present invention is applied as a writable DVD medium, the basic structure is a structure in which a first substrate and a second substrate (hereinafter called first substrate, second substrate upon occasion) are laminated by an adhesive via a recording layer. In order to increase the reflectance, the recording layer must be a multilayer of a recording layer and a reflective layer. The layers may be formed with an undercoat layer or a protective layer between the recording layer and the substrate, or these may be layered in order to improve the functions. The structure which is first substrate / organic dyestuff layer /reflective layer /protective layer / adhesive layer / second substrate is most commonly used.

- Recording Layer -

The recording layer is a layer in which, due to the illumination of laser light, some type of optical change arises thereat, and information can be recorded due to this change. The recording layer contains at least an organic dyestuff, and the organic dyestuff contains a dispersible resin and a brown color preventing agent, as well as other components as needed.

The organic dyestuff is not particularly limited and can be appropriately selected in accordance with the object. Examples include the materials exhibiting absorbance in the range of wavelengths of 381 to 435 nm and mentioned on pages 547 to 550 of Dyestuff Handbook (Kodansha, published March 20, 1986, first edition, editor: S. Okawara et al.), and derivatives thereof, and the like. Examples of the organic dyestuff include polymethine dyestuffs, anthraquinone dyestuffs, dioxidine dyestuffs, triphenodithiazine dyestuffs, phenanthrene dyestuffs, cyanine dyestuffs, dicarbocyanine dyestuffs, phthalocyanine dyestuffs, naphthalocyanine dyestuffs, merocyanine dyestuffs, pyrylium dyestuffs, porphyrin dyestuffs, xanthene dyestuffs, triphenylmethane dyestuffs, azulene dyestuffs, metal-containing azo dyes, azo dyes, azo dyestuffs, squarylium dyestuffs, polyene dyestuffs, base styryl dyestuffs, formazan chelate dyestuffs, croconium dyestuffs, indigoid dyestuffs, methine dyestuffs, sulfide dyestuffs, methanedithiolate dyestuffs, or derivatives thereof, or the like. Among these, cyanine dyestuffs or derivatives thereof, dicarbocyanine dyestuffs or derivatives thereof, phthalocyanine dyestuffs or derivatives thereof, naphthalocyanine dyestuffs or derivatives thereof, and azo dyes or derivatives thereof are particularly suitably used. Note that dyestuff materials, to which various types of quenchers such as aminium dyestuffs or the like are added, can be used.

Usually, the film thickness of the recording layer is preferably 5 to 20 nm.

In forming the recording layer, a single type of the dyestuff which is characteristic of the present invention may be used, or a combination of plural dyestuffs may be used. Further, in addition to the dyestuffs which are characteristic of the present invention, other organic dyestuffs may be mixed together or layered for purposes of improving the optical characteristics, the recording sensitivity, the signal characteristics, and the like.

As metals or metal compounds within the dyestuff, for example, In, Te, Bi, Se, Sb, Ge, Sn, Al, Be, $TeO_2$, SnO, As, Cd or the like can be dispersed and mixed-in, or can be used in the form of a laminated layer.

Further, a polymer material can be compounded into the dyestuff. As the polymer material, for example, various materials such as an ionomer resin, a polyamide resin, a vinyl resin, a natural polymer, silicone, liquid rubber, and the like, or a silane coupling agent, or the like may be used by being dispersed and mixed-in. Or, for the purpose of improving the characteristics, a stabilizer (e.g., a transition metal complex), a dispersing agent, a fire retardant, a lubricant, an antistatic agent, a surfactant, a plasticizer, or the like can also be used together therewith.

Formation of the recording layer can be carried out by a usual means such as depositing, sputtering, CVD, solvent coating, or the like. When the coating method is used, the aforementioned dyestuff and the like are dissolved in an organic solvent, and coating can be carried out by a commonly-used coating method such as spraying, roller coating, dipping, spin coating, or the like.

The organic solvent is not particularly limited, and can be appropriately selected in accordance with the object. Examples include alcohols such as methanol, ethanol, isopropanol, 2,2,3,3-tetrafluoropropanol, and the like; ketones such as acetone, methylethylketone, cyclohexanone, and the like; amides such as N,N-dimethylformamide, N,N-dimethylacetoamide, and the like; sulfoxides such as dimethylsulfoxide and the like; ethers such as tetrahydrofuran, dioxan, diethylether, ethyleneglycolmonomethylether, and the like; esters such as methyl acetate, ethyl acetate, and the like; aliphatic halogenated hydrocarbons such as chloroform, methylene chloride, dichloroethane, carbon tetrachloride, trichloroethane, and the like; aromatics such as benzene, xylene, monochlorobenzene, dichlorobenzene, and the like; cellusolves such as methoxyethanol, ethoxyethanol, and the like; hydrocarbons such as hexane, pentane, cyclohexane, methylcyclohexane, and the like; and the like.

- Undercoat Layer -

The undercoat layer is used for the purposes of (1) improving adhesiveness, (2) a barrier to water or gasses or the like, (3) improving the storage stability of the recording layer, (4) improving the reflectance, (5) protecting the substrate and the recording layer from solvents, and (6) formation of guide grooves, guide pits, preformats, and the like.

With respect to above purpose (1), polymer materials, e.g., various polymer substances such as ionomer resins, polyamide resins, vinyl resins, natural resins, natural polymers, silicone, liquid rubber and the like, or silane coupling agents or the like can be used. With respect to above purposes (2) and (3), other than the aforementioned polymer materials, inorganic compounds, for example, $SiO_2$, $MgF_2$, SiO, $TiO_2$, ZnO, TiN, SiN and the like, and metals or semimetals, e.g., Zn, Cu, Ni, Cr, Ge, Se, Au, Ag, Al and the like, can be used. With respect to above purpose (4), metals, e.g., Al, Ag and the like, and organic thin films having metal gloss, e.g., methine dyes, xanthene dyes or the like, can be used. With respect to above purposes (5) and (6), ultraviolet curing resins, thermosetting resins, thermoplastic resins, and the like can be used.

The film thickness of the undercoat layer is not particularly limited and can be appropriately selected in accordance with the object, and 0.01 to 30 μm is preferable and 0.05 to 10 μm is more preferable.

- Reflective Layer -

As the material of the reflective layer, the aforementioned silver (Ag) alloys are used. Examples of the method of forming the reflective layer are depositing, sputtering, and the like.

- Protective Layer and Substrate Surface Hard Coat Layer -

The protective layer or the substrate surface hard coat layer is used for the purposes of (1) protecting the recording layer (the reflection absorbing layer) from scratches, dust, dirt, and the like, (2) improving the storage stability of the recording layer (the reflection absorbing layer), (3) improving the reflectance, and the like. With respect to these purposes, the inorganic materials or organic materials set forth in the above-described intermediate layers can be used. As the inorganic material, for example, SiO, $SiO_2$, or the like also can be used. As the organic material, heat-softening resins, heat-fusible resins, and ultraviolet curing resins such as, for example, polymethylacrylate resins, polycarbonate resins, epoxy resins, polystyrene resins, polyester resins, vinyl resins, cellulose, aliphatic hydrocarbon resins, aromatic hydrocarbon resins, natural rubber, styrene-butadiene resin, chloroprene rubber, waxes, alkyd resins, drying oils, rosin, and the like can also be used. Among these materials, ultraviolet curing resins which have excellent produceability are examples which are most preferable for the protective layer or the substrate surface hard coat layer.

The film thickness of the protective layer or the substrate surface hard coat layer is preferably 0.01 to 30 μm, and more preferably 0.05 to 10 μm.

In the present invention, the undercoat layer, the protective layer, and the substrate surface hard coat layer may, in the same way as the recording layer, further contain a stabilizer, a dispersant, a fire retardant, a lubricant, an antistatic agent, a surfactant, a plasticizer, or the like in accordance with the object.

- Protective Substrate -

In a case in which laser light is illuminated from the protective substrate side, the protective substrate must be transparent with respect to the laser light which is used. In a case in which the protective substrate is used merely as a protective plate, it does not have to be transparent. The substrate materials which can be used are exactly the same as the aforementioned substrate materials. Plastics such as polyester resins, acrylic resins, polyamide resins, polycarbonate resins, polyolefin resins, phenol resins, epoxy resins, polyimide resins, and the like, or glass, ceramic, or metal or the like can be used.

- Adhesive, Adhesive Layer -

The adhesive is not particularly limited provided that it is a material which can adhere two recording media, and can be appropriately selected in accordance with the object. In consideration of produceability, ultraviolet curing type adhesives or hot melt type adhesives are preferable.

(Method of Manufacturing Optical Recording Medium)

The method of manufacturing an optical recording medium of the present invention controls and manufactures such that the substrate thickness is 580 to 620 μm, and when the substrate thickness is within a given range from the set central value, the axial direction acceleration of the optical recording medium has a maximum allowable value, and as the amount of deviation from the set central value of the substrate thickness becomes exceeds the given range and becomes larger, the maximum allowable value of the axial direction acceleration becomes smaller.

In this case, it is preferable to mold the substrate by extrusion compression molding by using a stamper at which the thickness of the outer peripheral portion is thicker than the thickness of the inner peripheral portion. Concretely, it is preferable to carry out extrusion compression molding by using a stamper in which the difference between the thickness of the inner peripheral portion and the thickness of the outer peripheral portion is less than or equal to ±20 μm. Note that the conditions of the extrusion compression molding are not particularly limited, and can be appropriately selected in accordance with the object. The conditions can be set and the molding can be carried out such that the processes of mold opening, material injection, pressurization and compression, and substrate removal are carried out during a process time of 2 seconds under the condition of 130 to 200°C for example, by using an extrusion compression molder which can pressurize and compress at about greater than or equal to 40t and less than or equal to 80t for example.

In the method of manufacturing a phase-changing-type optical recording medium of the present invention, it suffices to as much as possible not cause thermal damage to the substrate and suppress the occurrence of warping of the substrate by first optimizing the conditions for molding the substrate and making the deviation from the set central value of the substrate thickness be as small as possible, and further, optimizing the input power amount at the time of stamper molding of the recording layer, the dielectric layer, the reflective layer and the like for example. By taking such measures with respect to the manufacturing conditions, an optical recording medium which has axial direction acceleration within the hatched portion of Fig. 6 can be manufactured.

Further, in the case of a writable optical recording medium having a recording layer containing an organic dyestuff of the present invention, as the means for suppressing the generation of warping of the substrate, in addition to means such as the aforementioned optimizing of the input power amount at the time of stamper molding, it is possible to employ means such as making the heat raising time be slow in order to avoid a sudden temperature change at the time of the annealing process which is carried out after the dyestuff recording layer is formed by spin coating or the like, or the like.

It is preferable that, given that the maximum allowable value of the axial direction acceleration of the optical recording medium, at a time when the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M (m/sec$^2$), and the substrate thickness is D (μm), the optical recording medium is manufactured such that the maximum allowable value M of the axial direction acceleration satisfies 2.5 m/sec$^2$ in a range of 590 μm < D < 610 μm, and satisfies following mathematical formula 1 in a range of 610 μm ≤ D ≤ 620 μm, and satisfies following mathematical formula 2 in a range of 580 μm ≤ D ≤ 590 μm.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

In the present invention, it is preferable to monitor the relationship between the substrate thickness and the axial direction acceleration of the optical recording medium, and to assess the success/failure by comparing the monitored value with a success/failure assessment reference which relates to the relationship between the deviation amount from the set central value of the substrate thickness which is set in advance and the maximum allowable value of the axial direction acceleration of the optical recording medium. By assessing the success/failure from both aspects of the substrate thickness and the axial direction acceleration of the optical recording medium so as to fall within the hatched portion of Fig. 6 for example, there no concern that defective goods will be mixed-in among the products, and optical recording media which are highly reliable in terms of recording characteristics can be manufactured efficiently.

(Recording and Reproducing Method)

The recording and reproducing method of the present invention carries out recording and reproducing on the above-described optical recording medium of the present invention, by using a pickup having a frequency band which is determined in advance and corresponds to a recording and reproducing speed.

Here, it is preferable that a wavelength of laser light of the pickup is 620 to 700 nm, and a lens NA is 0.60 to 0.70.

Further, when a linear velocity (L.V.) used in recording is 14 m/sec < L.V. ≤ 56 m/sec, it is preferable that the frequency band (the point where the gain becomes 0) of a pickup having a vibration damping characteristic such as shown in Fig. 8, satisfies following mathematical formula 3:

<Mathematical Formula 3>

frequency band (kHz) = [recording linear speed (m/sec) / basic

linear speed (m/sec)] $\times$ (0.589) [(+10%) to (-0%)]

where, in mathematical formula 3, the basic linear speed is a recording and reproducing speed which is basic in a system, and is 3.49 m/sec in a DVD, and [(+10%) to (-0%)] expresses tolerance at a - (minus) side and a + (plus) side.

Namely, because the tolerance of the (-) side in above mathematical formula (3) cannot be lower than the characteristic of the disk, it must always be made to be greater than the frequency band of the disk, and therefore, the tolerance of the (-) side is 0%. Further, it is preferable that the tolerance of the (+) side in above mathematical formula (3) be large, but if it is too large, self-oscillation of the actuator occurs, and therefore, about 10% is preferable. Accordingly, with regard to the frequency band (the point where the gain becomes 0) of a pickup having a vibration damping characteristic, within the range enclosed by the two straight lines in Fig. 8, and concretely, under the condition of DVD 8x speed, the servo characteristic of a pickup suited to optical recording media whose axial direction acceleration is 2.5 m/sec$^2$ is about 4.8 kHz to 7 kHZ, and in the range of a linear velocity of 16x speed (recording linear velocity = 56 m/sec), a frequency band of about 9.4 kHz to 14 kHz can be used.

Examples

Hereinafter, the present invention will be described more concretely by Examples, but the present invention is not to be limited by these Examples.

(Example 1)

- Manufacturing of Optical Recording Medium -

A polycarbonate resin substrate, through which light beams were transmitted and which had a set central value of a thickness of 600 μm, was manufactured by extrusion compression molding. At the time of molding the substrate, the extrusion compression molding conditions (setting so as to carry out the processes of mold opening, material injection, pressurization and compression, and substrate removal during a process time of two seconds under the condition of, for example, 130 to 200°C, by using an extrusion compression molder by which pressurization and compression of, for example, about greater than or equal to 40 t and less than or equal to 80 t was possible) were adjusted appropriately, and substrates having portions of various thicknesses as shown in Table 1 were manufactured. Note that the substrate thicknesses shown in Table 1 show the values which, among the measured values, deviated the most from the 600 μm set central value of the substrate thickness. Here, the substrate thickness was measured by using the ETA RT manufactured by STEAG ETA-Optik GmbH.

Next, a lower dielectric layer formed from ZnS •$SiO_2$ (80 mol% : 20 mol%) was formed on the substrate by sputtering so as to be a thickness of 70 nm. In this case, for Nos. 4, 5, and 8 in Table 1, the sputtering of the lower dielectric layer was carried out at a usual input power (about 1 kV), and for the others, was carried out by varying within a range which was at most about 15% less than the usual input power. Lower dielectric layers having various warpings (thicknesses) were thereby formed on the substrates.

Next, a recording layer formed from $Ag_1In_3Sb_{73}Te_{20}Ge_3$ was formed on the lower dielectric layer by sputtering so as to be a thickness of 15 nm. An upper dielectric layer formed from ZnS • $SiO_2$ (80 mol% : 20 mol%) was formed on the recording layer by sputtering so as to be a thickness of 15 nm. A reflecting layer formed of Ag was formed on the upper dielectric layer by sputtering so as to be a thickness of 150 nm. Next, a protective layer formed from an ultraviolet (UV) curing resin (SD318 manufactured by Dainippon Ink and Chemicals, Incorporated) was formed on the reflective layer by spin coating, and finally, a cover layer of a thickness of about 0.6 mm was adhered by an ultraviolet (UV) curing resin (DVD3 manufactured by Nippon Kayaku Co., Ltd.) and laminated.

In this way, optical recording media, which had the deviations from the central value (600 μm) of the substrate thickness and the axial direction accelerations of various magnitudes due to the warping of the substrate; which are shown in Table 1, were manufactured.

The axial direction accelerations of the respective obtained optical recording media were measured by the LM1200 manufactured by Ono Sokki Co., Ltd. The results are shown in Table 1.

Further, recording was carried out on the respective obtained optical recording media, at a DVD 8x speed (recording linear velocity = 28 m/sec) by optimizing the focus offset to 600 μm which was the set central value of the substrate thickness, by using a pickup whose frequency band of the axial direction feedback loop of the optical recording medium was 5 kHz. Then, the error ratios of the reproduction signals, at the time of carrying out reproduction at a basic recording and reproducing speed of a DVD (recording linear velocity = 3.5 m/sec) by optimizing the focus offset of the pickup such that the reproduction signals respectively became maxima, were evaluated as follows. Further, the success/failure was assessed as follows. The results are shown in Table 1.

<Evaluation of Error Rate>

The error ratio was evaluated by the following standards by measuring the number of correctable errors, in accordance with a DVD correction code. In a case in which there were less than 150 errors, the evaluation was "○", and in a case in which there were 150 to 250 errors, the evaluation was "□", and in a case in which there were more than 250 errors, the evaluation was "×".

<Evaluation of Success/Failure>

For the optical recording media manufactured by layering the respective layers, judging from the obtained axial direction acceleration and substrate thickness, when the relationship of the substrate thickness and the axial direction acceleration was within the hatched portion of Fig. 6, the success/failure was "○", and when the relationship fell outside of the hatched portion, the success/failure was "×".

Table 1

| no. | substrate thickness (μm) | axial direction acceleration (m/sec$^2$) | success/ failure | error rate |
|---|---|---|---|---|
| 1 | 574 | 2.2 | × | × |
| 2 | 585 | 2.9 | × | × |
| 3 | 590 | 3.2 | × | × |
| 4 | 590 | 2.3 | ○ | ○ |
| 5 | 602 | 2.3 | ○ | ○ |
| 6 | 602 | 4.0 | × | × |
| 7 | 615 | 2.6 | × | □ |
| 8 | 615 | 2.0 | ○ | ○ |
| 9 | 631 | 2.1 | × | × |

From the results of Table 1, the error rate also was "o" for the optical recording media of Nos. 4, 5, and 8 which were within the hatched portion of Fig. 6. Accordingly, it was confirmed that, whether or not the optical recording medium was within the hatched portion of Fig. 6 could be employed as the reference for assessing the success/failure.

Further, in the results of carrying out recording at 4× speed of a DVD (recording linear velocity = 14 m/sec), the error rates were all less than 100, and it was confirmed that the aforementioned success/failure assessment reference was effective for times of high speed recording exceeding 4× speed (recording linear velocity = 14 m/sec).

(Example 2)

An "optical recording medium A" was manufactured in the same way as in Example 1 except that a polycarbonate resin substrate, which was extrusion compression molded by a stamper whose difference in thicknesses between the inner peripheral portion and the outer peripheral portion was less than or equal to ±5 μm, was used in

Example 1.

Further, an "optical recording medium B" was manufactured in the same way as in Example 1 except that a polycarbonate resin substrate, which was extrusion compression molded by using a stamper in which the thickness of the outer peripheral portion was 20 μm thicker than the thickness of the inner peripheral portion, was used in Example 1.

The substrate thicknesses of the obtained "optical recording medium A" and "optical recording medium B" were distributed as shown in Fig. 9. The substrate thicknesses of both of optical recording media A and B fell within the hatched portion shown in Fig. 6. However, when this was judged together with the results of monitoring the axial direction acceleration, and manufacturing was carried out while excluding the optical recording media which fell outside of the hatched portion of Fig. 6, the yield of "optical recording medium A" was 83%, and the yield of "optical recording medium B" was 91%.

Here, the reason that the yield of "optical recording medium A" was lower than the yield of "optical recording medium B" is thought to be as follows: in the case of "optical recording medium A", there are included optical recording media whose substrate thicknesses shown in Fig. 6 were ±10 μm to ±20 μm the central value and whose axial direction accelerations were 2.0 m/sec$^2$ to 2.5 m/sec$^2$, but because the portion above the hatched portion of Fig. 6 is enclosed by a quadratic function curve, media which are above this quadratic function curve and fall outside of the hatched portion are included among the media which satisfy this condition.

(Example 3)

100 of the optical recording media, in which the substrate thicknesses and the maximum axial direction accelerations were varied, were manufactured in the same way as in Example 1. As shown in Fig. 6, the relationships between the amount of deviation from the set central value of the substrate thickness and the maximum allowable value of the axial direction acceleration were determined, and the error rates were evaluated in the same way as in Example 1. Note that the values are expressed by average values.

The results thereof were that, among the optical recording media falling within the hatched portion of Fig. 6, no media whose error rate at the time of high speed recording was greater than the standard value of a DVD were found, whereas media whose error rates were poor were included in a proportion of about 65% among the optical recording media falling outside of the hatched portion of Fig. 6.

Accordingly, it was confirmed that it was possible to use whether or not the optical recording medium fell within the hatched portion of Fig. 6, as the reference for assessing success/failure at the time of manufacturing an optical recording medium.

In accordance with the present invention, at the time of manufacturing optical recording media corresponding to high speeds exceeding 4x speed of a DVD (recording linear velocity = 14 m/sec), by assessing the success/failure from both aspects which are the substrate thickness and the axial direction acceleration of the medium, there is no concern that defective goods will be mixed-in with the products, and it is possible to provide optical recording media having good reliability with respect to the recording characteristics.

Industrial Applicability

The optical recording medium of the present invention can obtain a sufficient focusing characteristic even at recording speeds at which the recording linear velocity exceeds 4x speed (recording linear velocity = 14 m/sec) at the same capacity as a DVD-ROM, and can suppress in-plane fluctuations of the degree of modulation, and enables highly reliable recording, and can be widely used as various types of optical recording media, and in particular, as DVD optical recording media such as a DVD-ROM, DVD-RAM, DVD-R, DVD-RW, DVD+R, DVD+RW, and the like.

## Claims

**1.** An optical recording medium comprising:

a substrate, and at least a recording layer, and
a reflective layer on the substrate,

wherein the optical recording medium is formed such that the substrate has a set central value of a thickness, and when there is a substrate thickness within a given range from the set central value, an axial direction acceleration of the optical recording medium has a maximum allowable value, and as an amount of deviation from the set central value exceeds the given range, a maximum allowable value of the axial direction acceleration at the optical recording medium becomes smaller.

**2.** The optical recording medium according to claim 1, wherein the optical recording medium is formed such that the set central value of the substrate thickness is 600 μm, and, as the amount of deviation from the set central value exceeds ±10 μm, the maximum allowable value of the axial direction acceleration at the optical recording medium becomes smaller.

**3.** The optical recording medium according to any one of claims 1 to 2,
wherein the substrate thickness is 580 to 620 μm.

4. The optical recording medium according to any one of claims 1 to 3, wherein, given that the maximum allowable value of the axial direction acceleration of the optical recording medium, at a time when the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M ($m/sec^2$), and the substrate thickness is D (μm), the optical recording medium is formed such that the maximum allowable value M of the axial direction acceleration satisfies 2.5 $m/sec^2$ in a range of 590 μm < D < 610 μm, and satisfies following mathematical formula 1 in a range of 610 μm ≤ D ≤ 620 μm, and satisfies following mathematical formula 2 in a range of 580 μm ≤ D ≤ 590 μm.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

5. The optical recording medium according to any one of claims 1 to 4, wherein the axial direction acceleration at the optical recording medium is greater than or equal to 0.8 $m/sec^2$.

6. The optical recording medium according to any one of claims 1 to 5, wherein a peripheral direction acceleration at the optical recording medium is 0.8 to 2.0 $m/sec^2$.

7. The optical recording medium according to any one of claims 1 to 6, wherein a wavelength of laser light for recording and reproducing is 620 to 700 nm, and a lens NA is 0.60 to 0.70.

8. The optical recording medium according to any one of claims 1 to 7, wherein a recordable linear velocity (L.V.) is a range of 14 m/sec < L.V ≤ 56 m/sec.

9. The optical recording medium according to any one of claims 1 to 8, wherein the recording layer is a phase-changing-type recording layer.

10. The optical recording medium according to any one of claims 1 to 8, wherein the recording layer is an organic-dyestuff-containing recording layer.

11. A method of manufacturing an optical recording medium comprising:

controlling such that, when a substrate thickness is within a given range from a set central value, an axial direction acceleration of the optical recording medium has a maximum allowable value, and as an amount of deviation from the set central value of the substrate thickness exceeds the given range and becomes larger, a maximum allowable value of the axial direction acceleration becomes smaller,

wherein the optical recording medium comprises at least a recording layer and a reflective layer on a substrate.

12. The method of manufacturing an optical recording medium according to claim 11, wherein, given that the maximum allowable value of the axial direction acceleration of the optical recording medium, at a time when the substrate thickness is 580 to 620 μm and the optical recording medium is rotated at a linear velocity of 3.5 m/sec and measurement is carried out by using an optical pickup having a standard servo characteristic in which a frequency band of a rotational axial direction stipulated at a DVD reproduction system is 2.1 kHz, is M ($m/sec^2$), and the substrate thickness is D (μm), the optical recording medium is manufactured such that the maximum allowable value M of the axial direction acceleration satisfies 2.5 $m/sec^2$ in a range of 590 μm < D < 610 μm, and satisfies following mathematical formula 1 in a range of 610 μm ≤ D ≤ 620 μm, and satisfies following mathematical formula 2 in a range of 580 μm ≤ D ≤ 590 μm.

<Mathematical Formula 1>

$$M\ (m/sec^2) = 2.5 - [0.05 \times (D(\mu m) - 610\mu m)]$$

<Mathematical Formula 2>

$$M\ (m/sec^2) = 2.5 - [0.05 \times (590\mu m - D(\mu m))]$$

**13.** The method of manufacturing an optical recording medium according to any one of claims 11 to 12, wherein the substrate is molded by extrusion compression molding by using a stamper in which a thickness of an outer peripheral portion is thicker than a thickness of an inner peripheral portion.

**14.** The method of manufacturing an optical recording medium according to claim 13, wherein a difference in the thickness of the inner peripheral portion and the thickness of the outer peripheral portion at the stamper is less than or equal to ±20 μm.

**15.** The method of manufacturing an optical recording medium according to claim 11, further comprising monitoring a relationship between the substrate thickness and the axial direction acceleration of the optical recording medium, and assessing success/failure by comparing a monitored value with a success/failure assessment reference which relates to a relationship between the amount of deviation from the set central value of the substrate thickness which is set in advance and the maximum allowable value of the axial direction acceleration of the optical recording medium.

**16.** A recording and reproducing method comprising recording and reproducing on the optical recording medium of any of claims 1 to 10, by using a pickup having a frequency band which is determined in advance and corresponds to a recording and reproducing speed.

**17.** The recording and reproducing method according to claim 16, wherein a wavelength of laser light of the pickup is 620 to 700 nm, and a lens NA is 0.60 to 0.70.

**18.** The recording and reproducing method according to any one of claims 16 to 17, wherein, when a linear velocity (L.V) used in recording is 14 m/sec < L.V. ≤ 56 m/sec, the frequency band of the pickup is set so as to satisfy following mathematical formula 3:

<Mathematical Formula 3>

$$\text{frequency band (kHz)} = [\text{recording linear speed (m/sec)} / \text{basic linear speed (m/sec)}] \times (0.589)\ [(+10\%) \text{ to } (-0\%)]$$

where, in mathematical formula 3, the basic linear speed is a recording and reproducing speed which is basic in a system, and is 3.49 m/sec in a DVD, and [(+10%) to (-0%)] expresses tolerance at a - (minus) side and a + (plus) side.

FIG. 1

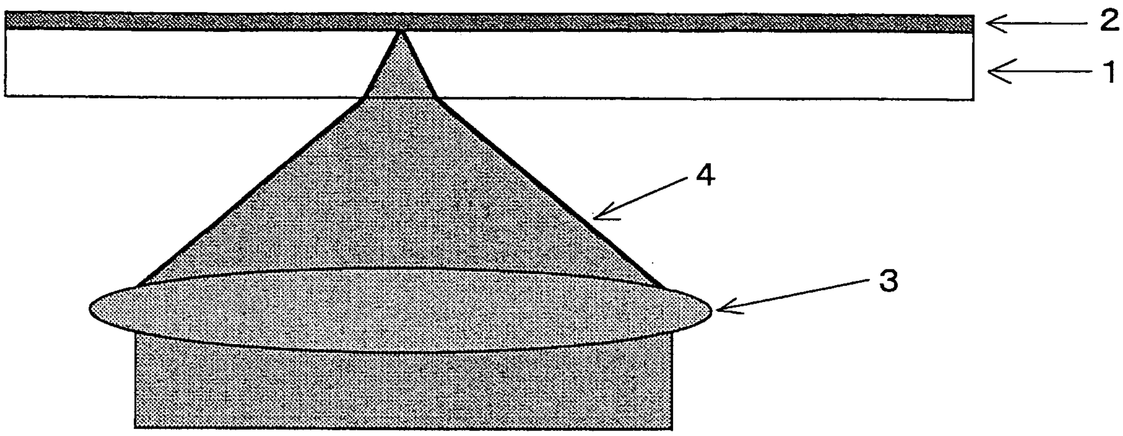


FIG. 2

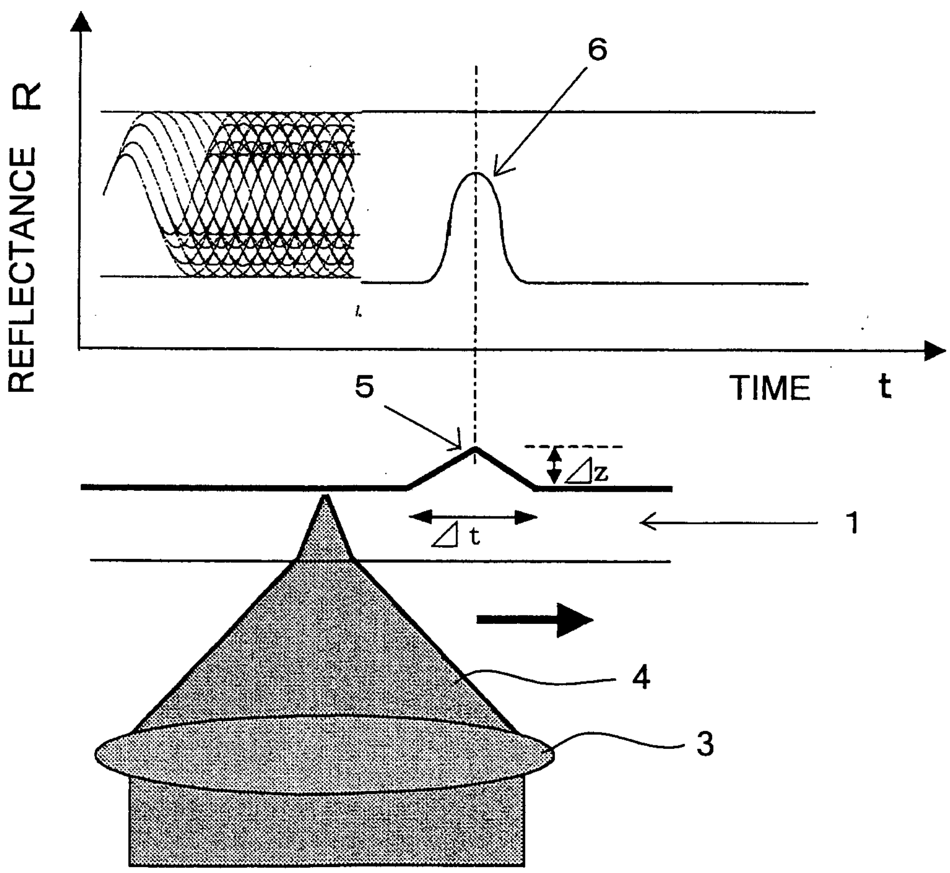

FIG. 3

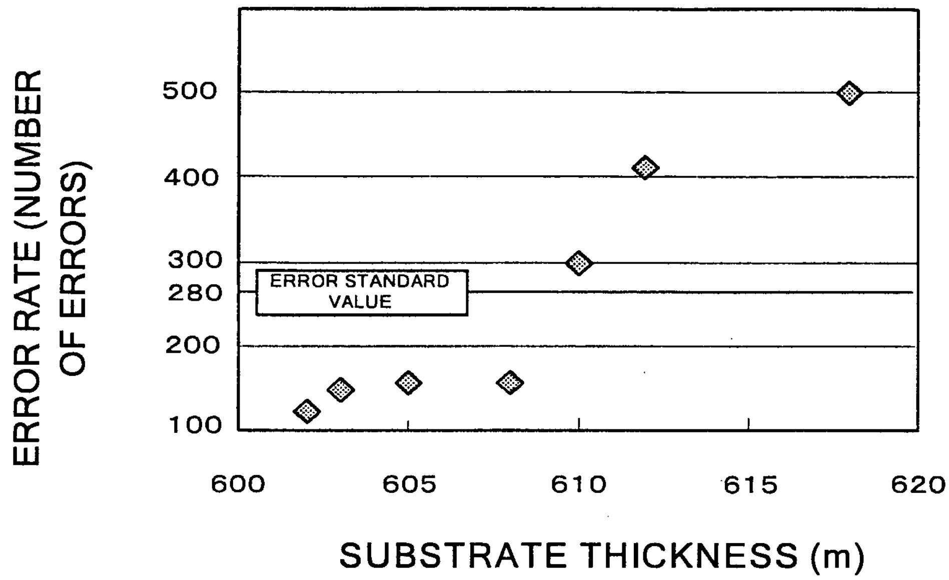
ERROR RATE (NUMBER OF ERRORS)
500
400
300
280
200
100
ERROR STANDARD VALUE
600
605
610
615
620
SUBSTRATE THICKNESS (m)

FIG. 4

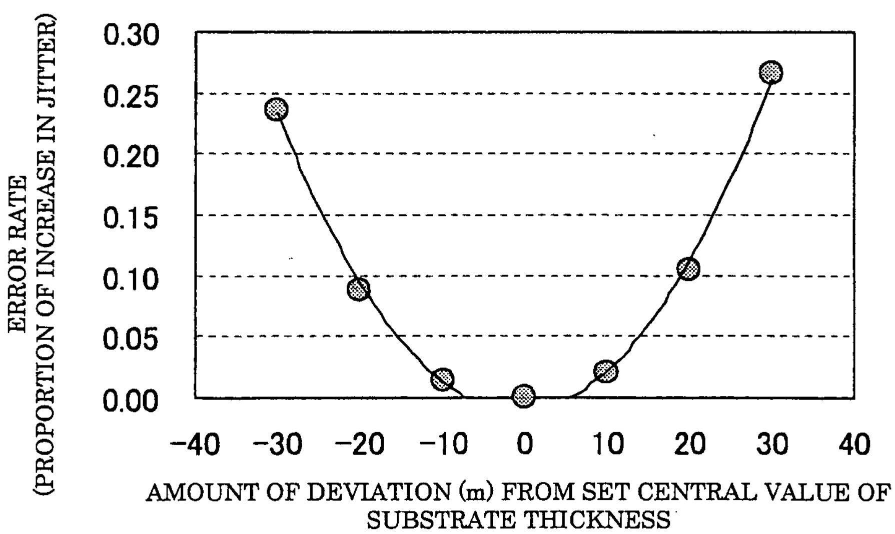
ERROR RATE (PROPORTION OF INCREASE IN JITTER)
0.30
0.25
0.20
0.15
0.10
0.05
0.00
−40
−30
−20
−10
0
10
20
30
40
AMOUNT OF DEVIATION (m) FROM SET CENTRAL VALUE OF SUBSTRATE THICKNESS

FIG. 5

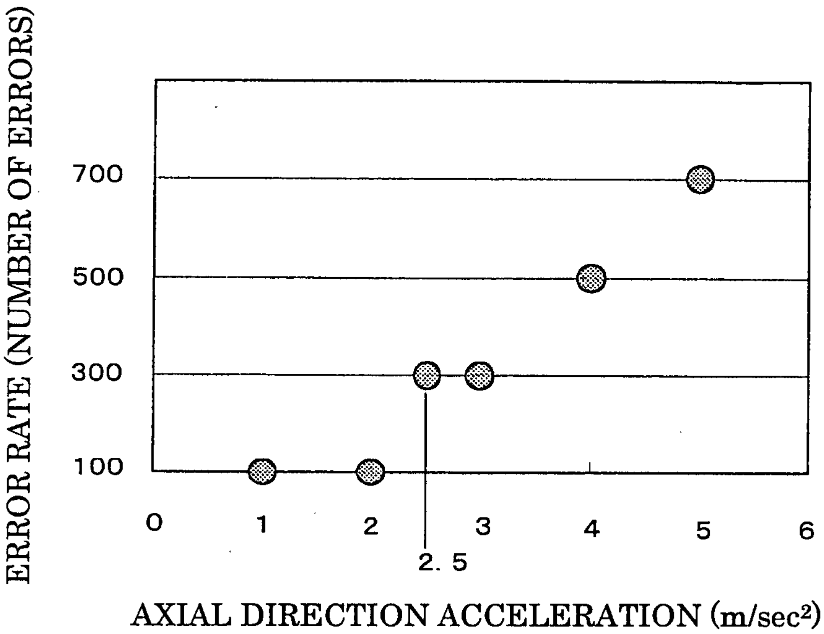
ERROR RATE (NUMBER OF ERRORS)
700
500
300
100
0
1
2
3
4
5
6
2. 5
AXIAL DIRECTION ACCELERATION (m/sec²)

FIG. 6

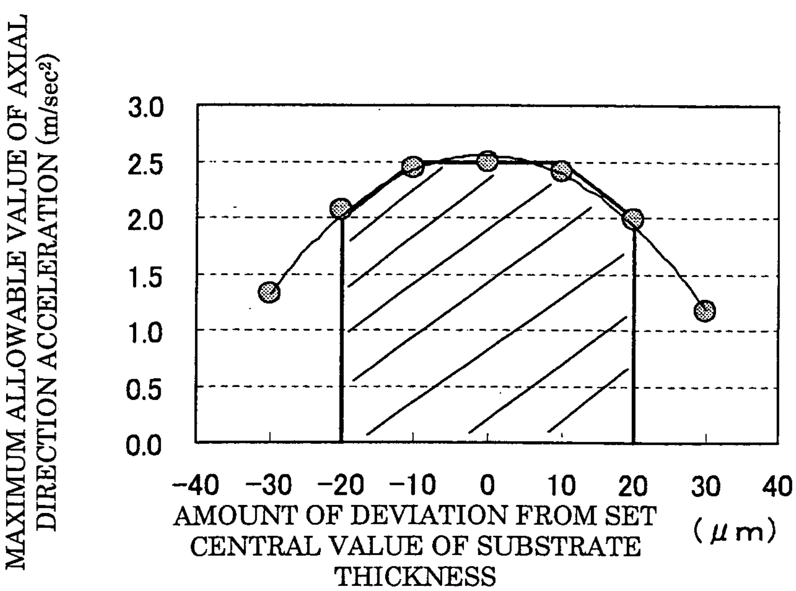
MAXIMUM ALLOWABLE VALUE OF AXIAL DIRECTION ACCELERATION (m/sec²)
3.0
2.5
2.0
1.5
1.0
0.5
0.0
-40 -30 -20 -10 0 10 20 30 40
AMOUNT OF DEVIATION FROM SET CENTRAL VALUE OF SUBSTRATE THICKNESS
(μm)

FIG. 7

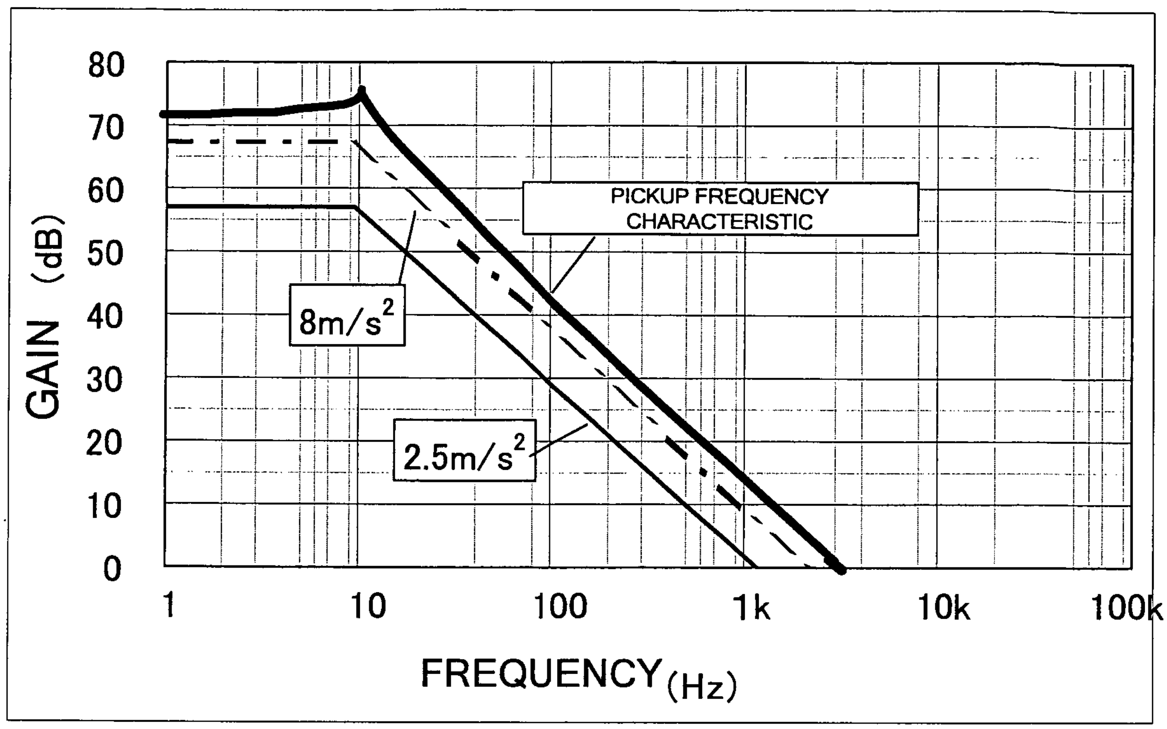
80
70
60
50
40
30
20
10
0
GAIN (dB)
PICKUP FREQUENCY CHARACTERISTIC
8m/s2
2.5m/s2
1
10
100
1k
10k
100k
FREQUENCY(Hz)

FIG. 8

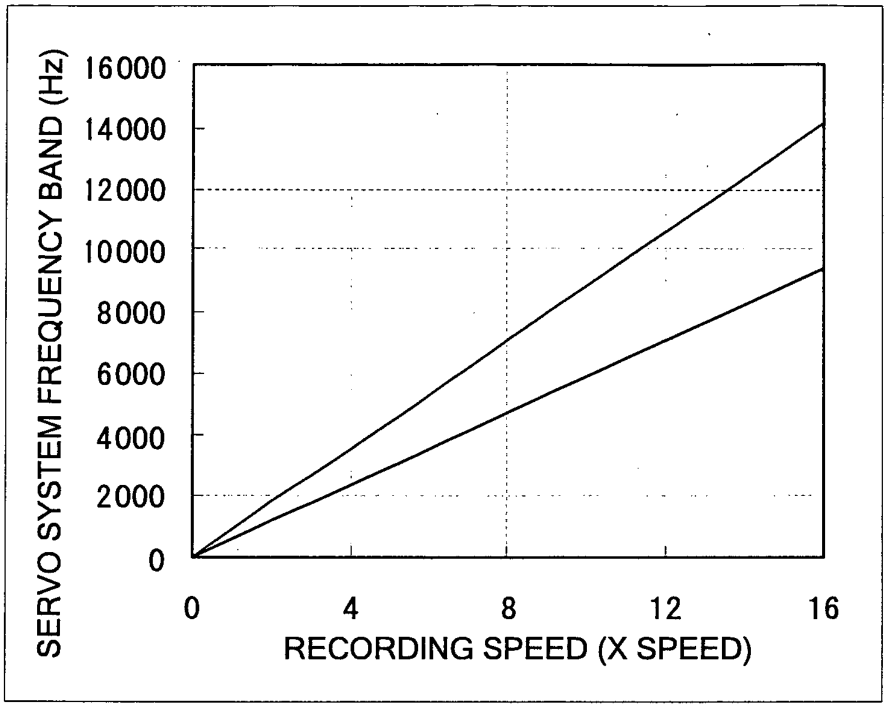
SERVO SYSTEM FREQUENCY BAND (Hz)
16000
14000
12000
10000
8000
6000
4000
2000
0
0
4
8
12
16
RECORDING SPEED (X SPEED)

FIG. 9

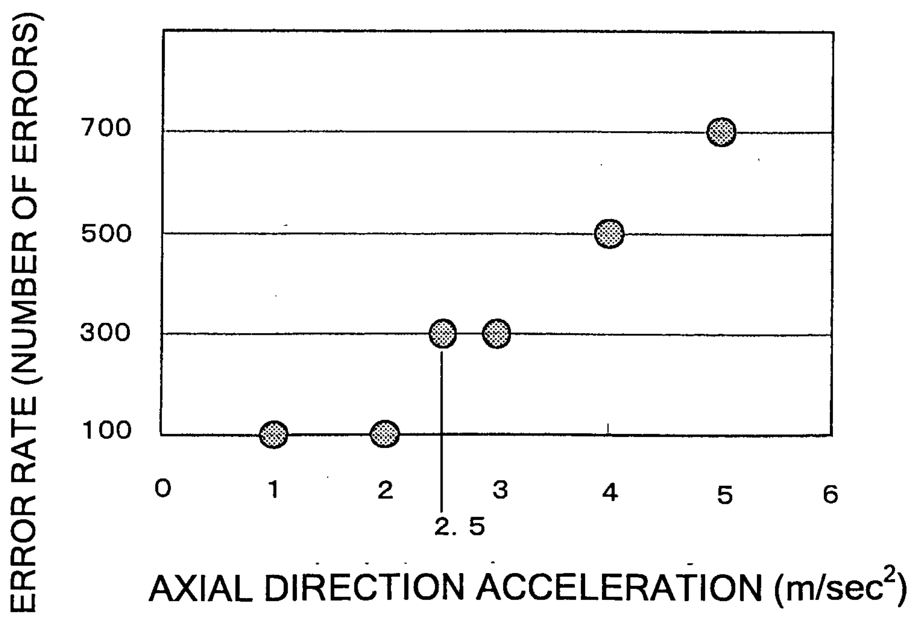
ERROR RATE (NUMBER OF ERRORS)
700
500
300
100
0
1
2
3
4
5
6
2. 5
AXIAL DIRECTION ACCELERATION (m/sec2)

FIG. 10

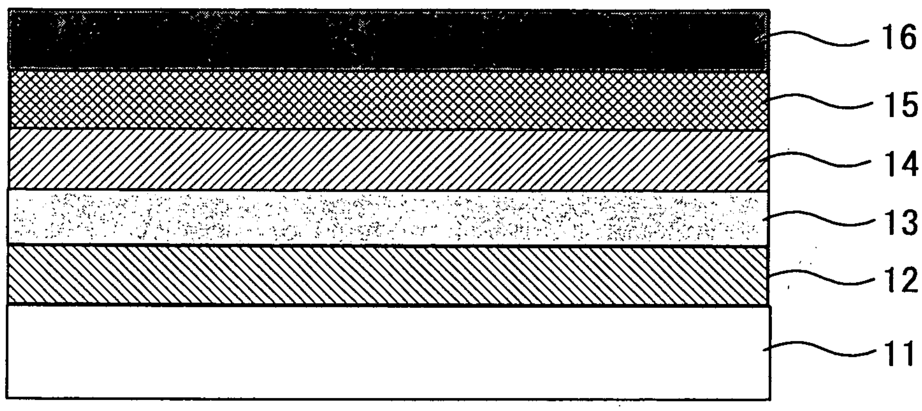


FIG. 11A

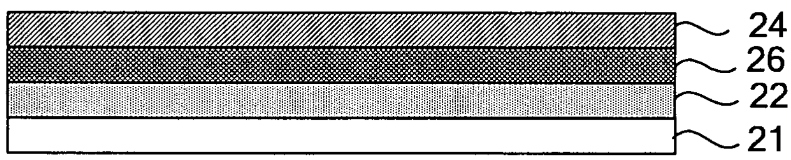


FIG. 11B

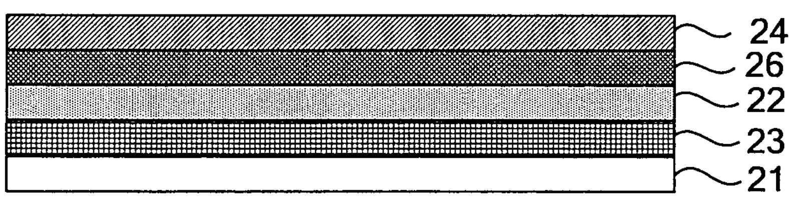


FIG. 11C

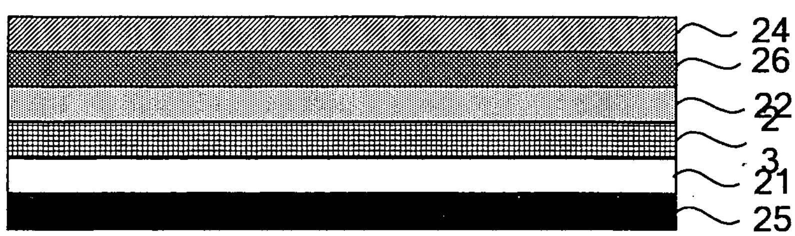

FIG. 12A

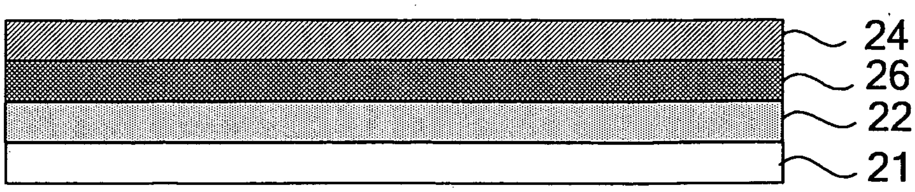


FIG. 12B

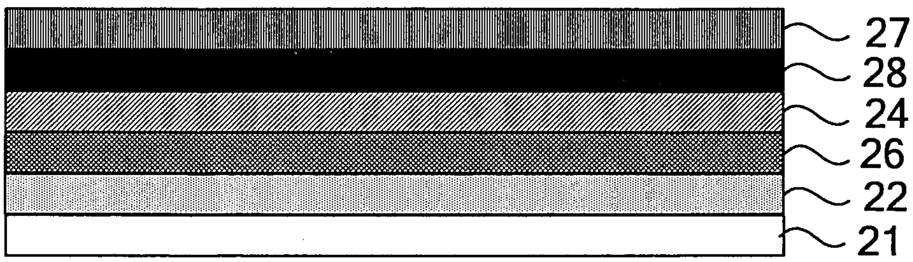


FIG. 12C

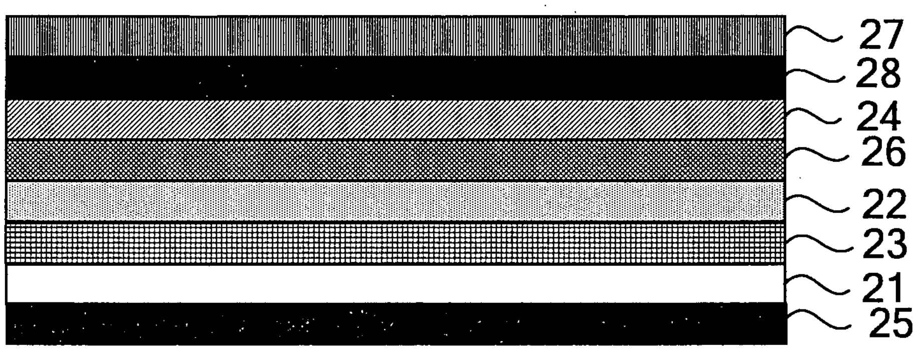

**INTERNATIONAL SEARCH REPORT**

International application No.
PCT/JP2004/004206

A. CLASSIFICATION OF SUBJECT MATTER
Int.Cl$^7$ G11B7/24, 7/26, 7/0045, 7/005

According to International Patent Classification (IPC) or to both national classification and IPC

B. FIELDS SEARCHED

Minimum documentation searched (classification system followed by classification symbols)
Int.Cl$^7$ G11B7/24, 7/26, 7/0045, 7/005

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 3137657 B (Asahi Chemical Industry Co., Ltd.), 08 December, 2000 (08.12.00), Full text; all drawings (Family: none) | 1-18 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 April, 2004 (19.04.04) | 11 May, 2004 (11.05.04) |
| Name and mailing address of the ISA/ Japanese Patent Office | Authorized officer |
| Facsimile No. | Telephone No. |

Form PCT/ISA/210 (second sheet) (January 2004)